Europäisches Patentamt

**European Patent Office**

Office européen des brevets

(19)

(11) Publication number: **0 102 666**
**A2**

(12) # EUROPEAN PATENT APPLICATION

(21) Application number: **83201193.6**

(22) Date of filing: **16.08.83**

(51) Int. Cl.³: **H 02 H 7/20**
**H 03 F 1/52**

(30) Priority: **30.08.82 US 413279**

(43) Date of publication of application:
**14.03.84 Bulletin 84/11**

(84) Designated Contracting States:
**DE FR GB**

(71) Applicant: **SPERRY CORPORATION**
**1290, Avenue of the Americas**
**New York, N.Y. 10019(US)**

(72) Inventor: **Strosser, Richard P.**
**104 Dogwood Drive**
**Akron PA. 17501(US)**

(74) Representative: **Vandenbroucke, Alberic T.J.**
**SPERRY NEW HOLLAND DIVISION OF SPERRY N.V.**
**Leon Claeysstraat, 3A**
**B-8210 Zedelgem(BE)**

(54) Method and apparatus for monitoring and protecting a semiconductor output device.

(57) A semiconductor output device (12) connected to a load (40) is monitored and protected from potentially destructive conditions such as short circuits, high current transients, and overload. A sensed voltage signal having a magnitude proportional to the magnitude of the current supplied by the semiconductor output device (12) to the load (40) is compared to a reference voltage (34). Whenever the reference voltage exceeds the sensed voltage signal, a pulse is triggered to deactivate the semiconductor output device (12).

EP 0 102 666 A2

./...

Fig. I

## METHOD AND APPARATUS FOR MONITORING AND PROTECTING A SEMICONDUCTOR OUTPUT DEVICE

This invention pertains to a method and apparatus for monitoring and protecting a semiconductor output device, and particularly to such a method and apparatus having an automatic reset capability.

As is well known, semiconductor output devices must be protected against short circuits and overloads. If high current transients or a short circuit were to occur in an electrical ciruit comprising a load and a semiconductor output device, the semiconductor output device would be subject to severe damage. In this respect, the metallic bonding connections between the substrate and semiconductor layers comprising the output device aan be fractured by a short circuit or high current transients, thereby rendering the semiconductor output device inoperative. Likewise, if an excessive load power requirement is placed on a semiconductor output device, the output device may overheat, resulting in reduced life of the device and possibly even thermal destruction of the output device.

The protection of semiconductor output devices from short circuits and overload is required in many technical areas. An illustrative example of one area of technical application is agricultural vehicles such as harvesters and combines wherein a semiconductor output device is used to provide current to a load. In agricultural vehicles of this type a semiconductor output device included on an electronic circuit (EC) board supplies current to a load external to the EC board. The load usually includes an element such as a relay which is connected to the semiconductor output device by electrical wiring. In some instances the relay is located in the vehicle cab or on a panel considerably distant from the semiconductor output device.

Unfortunately, the lengthy wiring connecting the relay to the output device may be damaged or worn due to mechanical failure or abrasion resulting in either a short circuit or a slow current drain when the damaged wire contacts the frame of the vehicle.

Moreover, the destructive overload condition described above can occur in instances when the load power requirements exceed the output device capability. Overload conditions can occur when too great a load is connected as upon repair of the vehicle, for example.

In view of the foregoing, an object of this invention is to provide a method and apparatus for protecting semiconductor output devices from potentially destructive conditions such as short circuits, high current transients, and overloads.

An advantage of this invention is the provision of a method and apparatus which not only protects a semiconductor output device from potentially destructive conditions, but which also after the detection of a potentially destructive condition periodically monitors for removal of the potentially destructive condition and automatically reactivates the semiconductor output device.

A further advantage of the invention is the provision of apparatus for protecting a semiconductor output device which is relatively economical, easily installed, and which requires few electrical components.

A semiconductor output device connected to a load is monitored and protected from potentially destructive conditions such as short circuits, high current transients, and overload. A sensed voltage signal having a magnitude proportional to the magnitude of the current supplied by the semiconductor output device to the load is compared to a reference voltage. Whenever the reference voltage exceeds the sensed voltage signal, a pulse is triggered to deactivate the semiconductor output device. The triggered pulse is used to deactivate the semiconductor output device for a time period related to the width of the pulse. The semiconductor output device is automatically reactivated upon cessation of the pulse so that a sensed voltage signal may again be obtained and compared to determine if the potentially destructive condition has yet been eliminated. In one embodiment an inductance is connected between the semiconductor device and the load to preclude the magnitude of the current supplied by the output device from rising too quickly before the semiconductor device can be deactivated.

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.

FIG. 1 is a schematic diagram showing an embodiment of the invention ;

FIG. 2 is a schematic diagram showing the connection of current limiting means to the embodiment of Fig. 1; and,

FIG. 3 is a schematic diagram showing the substitution of latching circuitry 20' for the comparator/single shot 20 of the embodiment of Fig. 1.

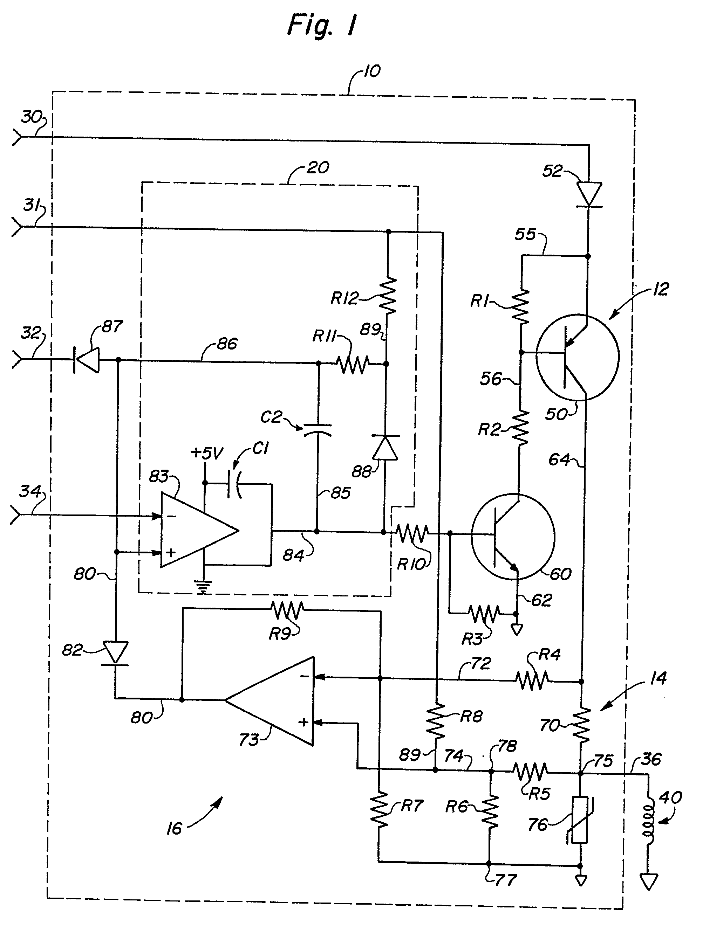

Fig. 1 shows an electronic circuit (EC) 10 which includes a semiconductor output device generally referred to as 12; a sensing device generally referred to as 14; a differential amplifier 16; and, a comparator/triggering means (or single shot) generally denoted by components bordered by dashed line 20. Also shown in Fig. 1 are various leads connected to the EC 10, such as lead 30 connected to an external voltage source; lead 31 connected to a source of voltage; lead 32 connected to an external control; lead 34 connected to a source of reference voltage; and, lead 36 connected to an external load 40.

The EC 10 can be used in numerous environments for the protection of the semiconductor output device 12 included thereon. One illustrative environment where the EC 10 can be used is in agricultural processing machinery such as, for example a forage harvester of the type described in U.S. Patent 3,523,411. EC 10 is particularly well suited to vehicular agricultural processing machinery which includes a metal detector for protecting the processing machinery from metallic ferrous or other objects which tend to damage the machinery. Examples of such machinery are seen in U.S. Patents 3,757,501; 3,889,249; 3,896,608; 3,959,953; 3,972,156; 4,193,248 and 4,261,161, all of which are assigned to the assignee of the present invention and all of which, together with U.S. Patent 3,523,411 are incorporated herein by reference for explaining the illustrative environment described herein in which the EC 10 functions.

Lead 30 connects the EC 10 to an external voltage source. In the illustrated embodiment, the voltage source is a 12 volt battery used in conjunction with the agricultural vehicle. In this regard, lead 30 in connected to the positive side of the battery. The load 40 includes a relay which serves as a buffer between the EC 10 and a solenoid (not illustrated). The relay is commercially available and is of a type having single pole, double throw contacts. The relay used in the illustrated embodiment has a 12 volt coil rating (nominal voltage) and a 45 ohm resistance. In the illustrated embodiment the reference voltage on lead 34 is 2.5 volts and the voltage on lead 31 is 5.0 volts.

During normal operation of the harvester of the illustrated embodiment, the relay included in load 40 creates a constant, non-interrupted signal to a solenoid associated with a feed roll drive system interrupt means. The signal from the relay maintains the solenoid, and, therefore, an entire feed roll drive system interrupt means, in a retracted position with respect to a ratchet. When the relay, and hence the solenoid, is not energized, a solenoid casing pin is released to interrupt the drive to the feed rolls. Although the relay, solenoid, feed roll, feed roll drive system, and feed roll drive syetem interrupt means are not illustrated herein, the operation thereof should be readily understood from the various patents noted above and already incorporated herein by reference.

The external control signal received on line 32 is, in the illustrated embodiment, supplied from a device adapted to detect the presence of an undesirable condition in the harvester. In the embodiment under discussion, the detecting device is a metal detector constructed according to the teachings of one or more of the patents already incorporated herein.

The semiconductor output device 12 comprises a PNP transistor (type 2N6666) labeled as 50 which has a Darlington configuration. The emitter of the PNP transistor 50 is connected to lead 30 through a blocking diode 52. The blocking diode 52 (type IN4004) serves to protect the output device 12 in the event a reverse voltage from the battery source were accidentally applied. The base of the PNP transistor 50 is connected to the emitter by a lead 55 having resistor R1 thereon. The base of the PNP transistor 50 is also connected by a lead 56 having resistor R2 thereon to the collector of an NPN transistor (type 2N4400) 60. The emitter of the NPN transistor 60 is connected to its base by a lead 62 having a resistor R3 thereon. The collector of the PNP transistor 50 is connected by lead 64 to the sensing device 14. Under normal operating conditions, the PNP transistor 50 functions to source current to the load 40. In the illustrated embodiment, the PNP transistor 50 can source up to eight amps without suffering the internal damage described hereinbefore.

Sensing device 14 comprises a resistor 70 connected in series on lead 64 between the collector of the PNP transistor 50 and the load 40. The value of the resistance 70 is selected depending upon the environment of use. The value of resistance 70 should be as large as possible in order to inherently limit current under short circuit conditions, but should not be so great that the voltage drop thereacross results in an insufficient voltage being applied to the load 40. In the illustrated embodiment, the resistance R is a 2 ohm, 3 watt resistor. It should be understood that in another embodiment the sensing device 14 can be a Hall Effect device rather than a resistor.

A lead 72 connects the high potential side of the resistor 70 through a resistor R4 to an inverting input terminal of an operational amplifier 73 (type LM 308) included in the differential amplifier 16. A lead 74 connects a low potential side of the resistor 70 through a resistor R5 to a non-inverting input terminal of the amplifier 73.

The low potential side of resistor 70 is connected at point 75 to a first terminal of a metal oxide varistor (MOV) 76 which functions to suppress undesirable voltage spikes. A second terminal of MOV 76 is connected to resistor R6 at point 77. Resistors R5 and R6 are connected at point 78. A resistor R7 is connected intermediate point 77 and the inverting input terminal of amplifier 73. A lead 89 having a resistor R8 thereon is connected between lead 74 (and hence the non-inverting input terminal of amplifier 73) and lead 31.

The amplifier 73, having its input terminals connected in the aforedescribed manner, sees the voltage drop across the resistance 70. It should be understood that the voltage drop across the resistance 70 is directly proportional to the current sourced by the PNP transistor 50. The differential amplifier 16 amplifies the voltage drop to a usable magnitude. Differential amplifier 16 has an adjustable gain which, in the embodiment illustrated, is set at approximately -6.8. Having a negative gain factor, the differential amplifier 16 not only amplifies the magnitude of the voltage drop but also inverts the amplified sensed voltage signal.

The output terminal of the amplifier 73 is connected by a lead 80 through a blocking diode 82 (type IN4148) to a non-inverting input terminal of an operational amplifier 83 (type LM308) included in the comparator/single shot 20. An inverting input terminal of the amplifier 83 is connected to the reference voltage applied on lead 34 as described above. The output terminal of the amplifier 83 is connected by a lead 84 having a resistor R10 thereon to the base of the NPN transistor 60. The output terminal of amplifier 83 is also connected to the external control signal on lead 32 through circuitry including a portion of lead 84; lead 85 having capacitance C2 thereon; lead 86; and, blocking diode 87. Blocking diode 88 and resistance R11 are connected to one another but are in parallel across capacitance C2. A point intermediate R11 and diode 88 is connected by lead 89 having resistor R12 thereon to lead 31. The comparator/single shot 20 is thus configured so that a signal is produced at its output terminal whenever the magnitude of the sensed voltage signal on lead 80 falls below the magnitude of the reference voltage applied on lead 34.

The NPN transistor 60 functions to invert the pulse of the comparator/single shot 20 and as an isolation buffer between the comparator/single shot 20 and the PNP transistor 50. The collector of the NPN transistor 60 is connected by lead 56 to the base of the PNP transistor 50 as described hereinbefore.

Suggested values for circuit elements for the illustrated embodiment are as follows :

| | | |
|---|---|---|
| R1 = 1K | R5 = 560K | R9 = 1M |
| R2 = 1K | R6 = 200K | R10 = 1K |
| R3 = 1K | R7 = 200K | R11 = 10K |
| R4 = 560K | R8 = 1M | R12 = 1M |

$$C1 = 0.1 \ \mu f$$
$$C2 = 1.0 \ \mu f$$

In a normal operating mode, the PNP transistor 50 sources current on lead 64, across resistor 70, and on lead 36 to the external load 40. Using the suggested circuit values described above, the current sourced by the PNP transistor 50 is in the neighborhood of 200 ma, but could reach as high as eight amps. As long as the current supplied by the PNP transistor 50 to the load 40 is less than one amp, the voltage drop across resistor 70 will be sufficiently small so that the magnitude of the output voltage signal from the differential amplifier 16 (which both amplified and inverted the voltage drop across the resistor 70) will exceed the reference voltage on line 34. As long as the magnitude of the voltage output signal from the differential amplifier 16 exceeds the reference voltage, the amplifier 83 does not trip and therefore does not fire the comparator/single shot 20. An unfired comparator/single shot 20 does not affect the NPN transistor 60, which in turn does not affect the PNP transistor 50. As a result, the relay and solenoid in the forage harvester remain energized so that the feed rolls continue to operate for inputting material into the harvester for processing.

If, at any time during the operation described above, the external control signal on lead 32 goes low to fire the comparator/single shot 20, the pulse so fired affects the NPN transistor 60 so that transistor 60 turns off the PNP transistor 50. In the illustrated embodiment, the external control signal on lead 32 goes low when an undesirable condition, such as the presence of metal proximate the feed rolls, is detected in the harvester. When the PNP transistor 50 is turned off, no current is supplied to the load 40 so that the motion of the feed rolls is interrupted. Although the comparator/single shot 20 fires a pulse of finite duration as seen below, the duration of the interruption of the motion of the feed rolls upon command of the external signal is controlled by unillustrated circuitry which does not form part of this invention. In this respect, even though the PNP transistor 50 of EC 10 may be reactivated after the cessation of the pulse from the comparator/single shot 20 to supply current to the load 40, the unillustrated additional circuitry may prohibit the feed rolls from turning until other requisite conditions are satisfied.

If a short circuit or high transient current occurs, the current supplied by the PNP transistor 50 increases. As the current supplied by the PNP transistor 50 increases, the magnitude of the voltage drop across the sensing device 14 comprising the resistor 70 increases. As the magnitude of the drop across resistor 70 increases, the magnitude of the output voltage from the differential amplifier 16 decreases since differential amplifier has a negative gain and thus performs an inversion operation. When the magnitude of the output voltage signal from differential amplifier 16 decreases to the extent that it is exceeded by the magnitude of the reference voltage on lead 34, the amplifier 83 'trips' to cause the comparator/single shot 20 to fire a pulse of predetermined pulse width. According to the suggested values of the circuit elements illustrated in the embodiment of Fig. 1, the pulse width of the pulse fired by single shot 20 is approximately 0.75 seconds. It should be understood however, that by selecting differing values for circuit elements, particularly C2 and R12, the pulse width may be selectively varied as desired.

During the 0.75 second pulse width of the pulse fired by comparator/single shot 20, the PNP transistor 50 is deactivated by the NPN transistor 60. Deactivation of the PNP transistor 50 turns off the current source to the load 40 and causes the voltage drop across the sensing device 14 to decrease. At that point the magnitude of the voltage output signal on lead 80 of the inverting differential amplifier 16 once again exceeds the reference voltage supplied on lead 34. The amplifier 83 then returns to its normal untripped state.

At the end of the duration of the pulse fired by the comparator/single shot 20, the PNP transistor 50 is again reactivated to source current to the load 40. If the potentially destructive condition was not rectified during the duration of the preceding pulse fired by the comparator/single shot 20, the current supplied by the PNP transistor 50 would again increase due to the destructive condition. As the current increases, the voltage drop across the resistance 70 increases. When the voltage drop across the resistance 70 increases so that the magnitude of the inverted voltage signal supplied on lead 80 by the differential amplifier 16 drops below the reference voltage supplied on line 34, the amplifier 83 again 'trips' to fire the comparator/single shot 20 and to turn off the PNP transistor 50 as was done earlier.

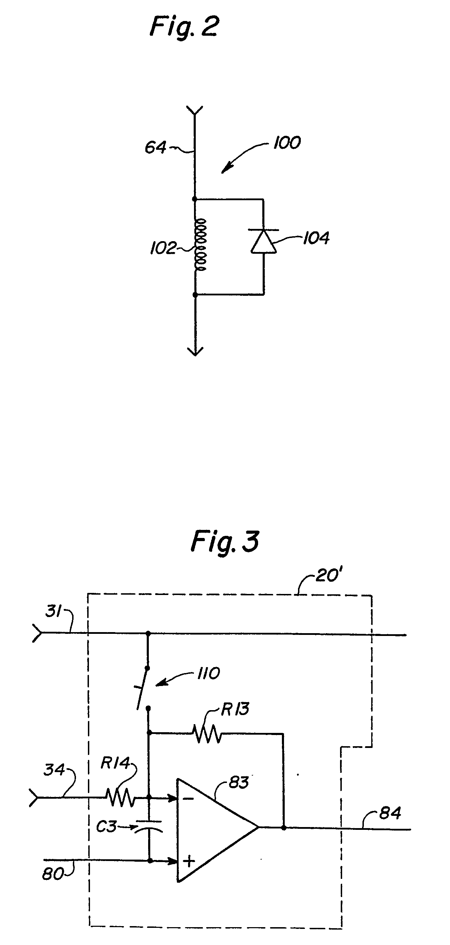

In the above regard, it should be noted that a propagation delay time is required around the loop (formed by the PNP transistor 50, the sensing device 14, the differential amplifier 16, the comparator/single shot 20, and the NPN transistor (60) in order to turn off the PNP transistor 50. In the illustrated embodiment, due to the specifications of the particular components utilized the delay time is approximately 250 microseconds. In most instances, a resistance of two ohms used for the resistance 70 will limit the magnitude of the current supplied by the output device 12 before the PNP transistor 50 can be deactivated. That is, the resistance 70 limits the current sourced by the PNP transistor 50. However, current limiting means 100 (shown in Fig. 2) comprising an inductance 102 can be placed in series between the collector of the PNP transistor 50 and the resistance 70. The value of the inductance 102 depends upon both the propagation delay time around a loop and the anticipated short circuit rise time. Also shown in the embodiment of Fig. 2 is a diode 104 (type IN4004) connected in parallel across the inductance 102 to dissipate the energy stored in the inductance 102 and thus suppress voltage spikes when the PNP transistor 50 is turned off. Otherwise, the voltage spikes could damage the semiconductor elements in the circuit.

Once the potentially destructive condition is removed, the current across the resistance 70 produces a sufficiently small voltage drop which, when amplified and inverted by the differential amplifier 16, exceeds the magnitude of the reference voltage supplied on lead 34. At this point, the amplifier 83, having already returned to its normal untripped state, does not trip again. Likewise, the comparator/single shot 20 does not fire so that the PNP transistor 50 remains active to continue to source current to the load 40.

As seen above, once the potentially destructive condition is detected, the output device 12 is turned off for a predetermined time corresponding to the pulse width of the pulse produced by the comparator/single shot 20. Upon cessation of the pulse, the EC 10 checks and, if need be, continues to check in periodic fashion whether the potentially destructive condition has been removed. Upon removal of the potentially destructive condition, the EC 10 is automatically reset so that the output device 12 may continue to source current to the load 40 without operator intervention.

Fig. 3 shows how the comparator/single shot 20 of the embodiment of Fig. 1 can be replaced by circuitry shown bordered by dashed lines 20'. The circuitry to Fig. 3 includes the operational amplifier 83 and a switch 110 connected to function as a manually resettable latch. A capacitance C3 is connected across the input terminals of the amplifier 83. Resistor R13 is utilized on the feedback loop of the amplifier 83. Resistor R14 is connected on lead 34 between the source of reference voltage and the amplifier 83. With respect to values for the circuit elements of circuit 20', the following values are suggested as examples : R13 = 100K; R14 = 10K; and C3 = 0.1 µf.

While the invention has been particularly shown and described with reference to the preferred embodiments thereof, it will be understood by those skilled in the art that various alterations in form and detail may be made therein without departing from the spirit and scope of the invention. For example, a conventional delay circuit comprising various capacitances and resistances can be connected intermediate the differential amplifier 16 and the amplifier 83. The delay circuit would preclude the PNP transistor 50 from being turned off during start up of a load which would exhibit transient currents during normal operation. In this regard, during start up it is not desirable to have the PNP transistor 50 deactivated by the inrush currents which may occur.

## 0102666

- 14 -

Claims

1.    A method of protecting a semiconductor output device (12) connected to supply current to a load (40) from potentially destructive conditions,
    characterized in the steps of :
    obtaining a sensed voltage signal having a magnitude proportional to the magnitude of the current supplied by the semiconductor output device (12) to the load (40)
    comparing the magnitude of the sensed voltage signal to the magnitude of a reference voltage signal
    triggering a pulse whenever the magnitude of the reference voltage signal exceeds the magnitude of the sensed voltage signal; and
    using said pulse to deactivate the semiconductor output device (12)

2.    A method according to claim 1, characterized in that the pulse is used to deactivate the semiconductor output device (12) for a time period related to the pulse width.

3.    A method according to claim 1 or 2, characterized in that it further also comprises the step of reactivating the semiconductor output device (12) upon the cessation of the pulse.

4.    A method according to any of the preceding claims; characterized in the further step of connecting an inductance (102) between the semiconductor output device (12) and the load (40) to preclude the magnitude of the current supplied by the output device (12) from rising to quickly before the semiconductor output device (12) can be deactivated.

5.       A method according to any of the preceding claims ; characterized in that it further also comprises the steps of :

- using the current supplied to the load (40) to operate means adapted to input material into a processing apparatus ;
- detecting the presence of an undesirable condition in the processing apparatus; and
- triggering a pulse to deactivate the semiconductor output device(12) whenever the undesirable condition is detected.

6.       An apparatus for protecting a semiconductor output device (12) connected to supply current to a load (40) from potentially destructive conditions characterized in :

means (70) for obtaining a sensed voltage signal having a magnitude proportional to the magnitude of the current supplied by the semiconductor output device (12) to the load (40)

means (83) for comparing the magnitude of the sensed voltage signal to the magnitude of a reference voltage signal;

means (20/20') for triggering a pulse whenever the magnitude of the reference voltage signal exceeds the magnitude of the sensed voltage signal; and,

means (60) for using said pulse to deactivate the semiconductor output device (12)

7.       An apparatus according to claim 6, characterized in that the means (60) for deactivating the semiconductor output device (12) deactivates the output device (12) for a time period related to the width of the pulse.

- 16 -

8.     An apparatus according to claim 7,
characterized in that
upon cessation of the pulse, the semiconductor output
device (12) is reactivated.


9.     An apparatus according to any of the claims 6
to 8 characterized in that it further also comprises an
inductance means (102) connected between the semiconductor output device (12) and the load (40)  for precluding the magnitude of the current supplied by the
output device (12) from rising too quickly before the
semiconductor output device (12) can be deactivated.


10.     A processing equipment comprising means
adapted to input material therein and means to process
input material characterized in the processing equipment
further also comprising a semiconductor output device
(12)  to supply current to operate the means adapted
to input material and an apparatus for protecting the
semiconductor output device (12) from potentially
destructive conditions; the protecting apparatus including
means (70) for obtaining a sensed voltage
signal having a magnitude proportional to the magnitude
of the current supplied by the semiconductor output device
(12) to the load (40)
means (83) for comparing the magnitude of the
sensed voltage signal to the magnitude of a reference voltage
signal;
means (20,20') for triggering a pulse whenever
the magnitude of the reference voltage signal exceeds
the magnitude of the sensed voltage signal; and
means (60) for using said pulse to deactivate
the semiconductor output device (12).

11. A processing equipment according to claim 10 further also comprising means for detecting the presence of an undesirable condition therein and characterized in that means are provided for also triggering a pulse whenever the undesirable condition in the processing equipment is detected; the means (60) for using the first said pulse to deactivate the semiconductor output device (12) also being responsive to the second said pulse to deactivate the output device upon the detection of the presence of an undesirable condition in the processing equipment.

12. A processing equipment according to claim 10 or 11, characterized in that the means (60) for deactivating the semiconductor output device (12) deactivates the output device for a time period related to the width of the pulse, and in that upon cessation of the pulse, the semiconductor output device (12) is automatically reactivated.

13. A processing equipment according to any of the claims 10 to 12, characterized in that it further also comprises an inductance means (102) connected between the semiconductor output device (12) and the load (40) for precluding the magnitude of the current supplied by the output device (12) from rising too quickly before the semiconductor output device (12) can be deactivated.

14. A processing equipment according to any of the claims 10 to 13, characterized in that it is formed by an agricultural processing equipment, wherein the means adapted to input material comprise a feed roll for feeding crop material and, wherein the detecting means are a metal detector suitable to detect metal objects in the crop material fed by the feed roll.

1/2

Fig. 1

2/2

*Fig. 2*

64 ~

100

102 ~

104

*Fig. 3*

20'

31

110

R13

34

R14

83

84

C3

80